# FASCICULE DE BREVET EUROPEEN

(11) **EP 1 257 698 B1**
(45) Date de publication et mention de la délivrance du brevet: **22.09.2004**
(21) Numéro de dépôt: 01907680.1
(22) Date de dépôt: 24.01.2001
(51) Int. Cl.: D01G 1/04, C03B 37/16

(54) **SYSTEME DESTINE A LA FABRICATION DE FILS COUPES EN MATIERE THERMOPLASTIQUE**
ANLAGE BESTIMMT FÜR DIE HERSTELLUNG VON THERMOPLASTISCHEN GESCHNITTENEN FASERN
SYSTEM FOR MAKING CLIPPED THERMOPLASTIC YARNS

(30) Priorité: 16.02.2000 FR 0001885
(43) Date de publication de la demande: 20.11.2002
(73) Titulaire: Saint-Gobain Vetrotex France S.A., 73000 Chambéry (FR)
(72) Inventeur: FONT, Dominique, F-73190 Saint-Baldoph (FR); PREVOSTO, Henri, F-73100 Aix les Bains (FR); BERTHELON, Laurent, F-73490 La Ravoire (FR)
(74) Mandataire: Muller, René
(86) Numéro de dépôt international: PCT/FR2001/000219
(87) Numéro de publication internationale: WO 2001/061088

(56) Documents cités:
- EP-A- 0 849 381
- EP-A- 0 879 803
- FR-A- 2 346 272
- PATENT ABSTRACTS OF JAPAN vol. 016, no. 461 (C-0988), 25 septembre 1992 (1992-09-25) & JP 04 164838 A (NITTO BOSEKI CO LTD), 10 juin 1992 (1992-06-10)

## Description

La présente invention concerne le domaine de la fabrication de fils coupés en matière thermoplastique, notamment de fils de verre, et elle concerne plus spécifiquement un système pour la fabrication de tels fils.

On connaît de nombreux dispositifs susceptibles de réaliser de telles fabrications. Ces systèmes comprennent généralement au moins une filière à partir de laquelle des fils de verre sont étirés et amenés jusque dans un dispositif de coupe constitué par exemple d'un cylindre d'appui ou enclume qui coopère avec un cylindre coupeur équipé de lames régulièrement réparties à sa périphérie. Le coupeur est disposé de manière à venir en contact sous pression avec la surface circonférentielle du cylindre d'appui, définissant ainsi une zone de coupe.

Le certificat d'addition français FR 2 075 019 illustre un système de ce type dans lequel une filière est associée à un dispositif de coupe.

Afin d'augmenter la productivité des installations de fabrication de fils coupés, on a imaginé des solutions selon lesquelles plusieurs filières alimentent un unique dispositif de coupe. Le brevet français FR 2 490 251 illustre une solution de ce type. Ces techniques présentent à priori l'avantage d'avoir une seule machine de coupe associée à plusieurs filières.

Cependant. à l'usage, ces installations montrent plusieurs inconvénients : d'abord une usure rapide des cylindres coupeurs qui doivent en effet couper des quantités très importantes de fils. On produit usuellement de l'ordre de 12 tonnes de fils coupés par jour de sorte que les cylindres coupeurs doivent être remplacés après 6 à 8 heures de fonctionnement. Cette configuration présente les inconvénients suivants :
- la perte de verre s'écoulant des filières
- un régime thermique filières et canal perturbé.

Par ailleurs. comme plusieurs fils alimentent un seul coupeur. la dispersion au niveau du débit de verre de chaque filière oblige à considérer la moyenne des débits pour le calcul de la vitesse du dispositif de coupe. Soit un écart type sur le titre important, non satisfaisant au niveau de la qualité du produit fini et donnant des rendements d'autant plus faibles que la filière est hors standard.

En outre, la tendance actuelle consiste à augmenter le nombre de filaments par toron. Chaque toron devient ainsi de plus en plus difficile à couper. Il s'en suit des coupes non régulières avec des brindilles plus ou moins fines et par voie de conséquence une densité du produit final non homogène. Il faut aussi noter une augmentation de la pression de coupe qui use prématurément les roues et peut provoquer des fusions.

Un autre problème important lié à ce concept concerne les ruptures des fils. Ces ruptures ou « casses » induisent une intervention humaine, pour relancer le fil dans la machine de coupe. Cet incident est donc particulièrement pénalisant pour le rendement de production car il requiert un temps de préparation relativement long.

De plus, la casse d'une filière peut interagir et générer par enroulement sur un organe de guidage la casse des autres filières avec alors la nécessité d'une relance de toutes les filières. Cette intervention humaine nécessite en effet un très long temps d'interruption de la production puisque l'opérateur doit alors relancer successivement chacun des fils.

La présente invention propose une solution aux problèmes évoqués ci-dessus. Elle permet d'accroître la productivité de tels systèmes, de diminuer les coûts de production tout en répondant aux nouvelles attentes des clients.

Plus précisément, la présente invention permet notamment d'augmenter la durée de vie de chaque cylindre coupeur.

Une meilleure maîtrise de la qualité du produit final est en outre réalisée.

Ainsi, la présente invention a pour objet un système destiné à la fabrication de fils de matière thermoplastique coupés, tels que des fils de verre coupés comprenant au moins une filière coopérant avec au moins une machine de coupe, placées dans le prolongement l'une de l'autre, au moins un moyen de renvoi, un moyen d'ensimage des fils et/ou des filaments issus de la filière, un plancher.

Conformément à l'invention, ledit système comprend en outre un moyen destiné à déplacer et à positionner la machine de coupe en au moins deux positions : l'une au-dessous dudit plancher, l'autre au-dessus dudit plancher, et une première ouverture dans le plancher à proximité de ladite machine, à travers laquelle est déplacée la machine de coupe.

En outre, le système peut comprendre un moyen destiné à diviser les fils avant leur entrée dans la machine de coupe.

Conformément à une caractéristique de l'invention, le système comprend en outre un élément destiné à couvrir ladite première ouverture dans le plancher notamment lorsque la machine est positionnée au-dessous du plancher.

Sans sortir du cadre de l'invention, le moyen de déplacement comprend un axe sensiblement horizontal autour duquel la machine de coupe peut se déplacer entre la première et la deuxième position.

Préférentiellement, les différents éléments sont disposés de telle sorte que le trajet des fils et des filaments depuis la filière jusqu'à la machine de coupe, est globalement contenu dans un plan vertical, les filaments ayant une direction sensiblement verticale de la filière jusqu'au moyen de renvoi, et les fils ayant une direction sensiblement horizontale du moyen de renvoi jusqu'à leur entrée dans la machine de coupe.

Avantageusement, le système selon l'invention comprend en outre au moins une deuxième ouverture dans le plancher pour le passage des filaments, en aval de la filière et avant leur passage sur le moyen de renvoi.

Selon un mode de réalisation de l'invention, le système comprend plusieurs filières chacune associée à une machine de coupe, et lesdites filières sont alignées les unes à côté des autres.

Ainsi, les machines de coupe sont alignées parallèlement aux dites filières.

Selon une caractéristique préférée de l'invention. chaque filière comprend au moins 4000 trous de passage des filaments thermoplastiques.

En outre. le système peut comprendre un moyen pour régler individuellement la vitesse d'étirage des fils en fonction du débit de la filière associée.

D'autres caractéristiques, détails, avantages de la présente invention apparaîtront mieux à la lecture de la description qui va suivre, faite à titre illustratif et nullement limitatif, en référence aux dessins annexés sur lesquels :
- la figure 1 est une perspective d'ensemble, simplifiée, d'un mode de réalisation de l'invention ; et
- la figure 2 est une perspective par laquelle on peut voir la machine de coupe dans deux positions différentes.

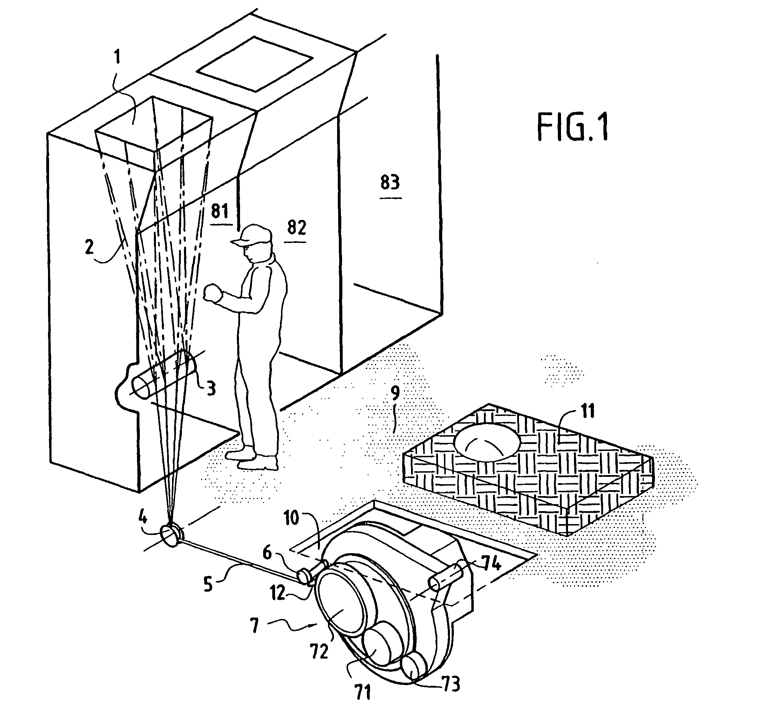

Sur la figure 1 apparaît donc, de façon schématique, le système selon l'invention qui comprend au moins une filière 1 alimentée, de façon connue, à partir de verre fondu ou de billes de verre délivrées par un dispositif d'alimentation non représenté. Ces filières, par exemple en platine rhodié, sont chauffés couramment par effet joule. Elles sont munies à leur partie inférieure d'une pluralité d'orifices à partir desquels une pluralité de filaments (ici certains sont représentés en traits mixtes) 2 peuvent être étirés mécaniquement.

Les filaments 2 peuvent être soumis à un ensimage c'est-à-dire à un traitement chimique destiné à leur appliquer un produit d'encollage ou lubrifiant, grâce à un rouleau ensimeur 3.

Les filaments 2 issus d'une filière sont ensuite réunis en au moins un fil qui est dévié par un moyen tel qu'une roulette dite de déviation 4 afin de dévier les fils 5 ou torons et de les envoyer vers une machine de coupe 7 située devant l'ensemble filière 1, rouleau ensimeur 3, roulette de déviation 4.

Sans sortir du cadre de l'invention, la machine de coupe 7 peut être placée derrière la filière.

Préférentiellement ladite machine de coupe 7 peut comprendre une roue porte-lame 71 , une roue enclume 72, éventuellement une roue meuleuse 73 comme décrit par exemple dans la demande de brevet FR 2 075 019 déposée au nom de la demanderesse.

Conformément à l'invention, la machine de coupe 7 comprend en outre un axe 74 préférentiellement horizontal autour duquel elle peut tourner afin de passer d'une première position à une deuxième position.

Par ailleurs, la disposition des principaux constituants du système selon l'invention est telle que le trajet des filaments 2 puis des fils 5 est globalement contenu dans un plan vertical, depuis la filière 1, jusqu'à la machine de coupe 7. Plus précisément les filaments 2 ont d'abord une direction sensiblement verticale depuis la filière 1 jusqu'à la roulette de déviation 4 puis les fils 5 décrivent un trajet sensiblement horizontal jusqu'à leur entrée dans la machine de coupe 7. Une roulette de guidage 6 peut être prévue à l'entrée de la machine 7 afin de garantir un arc d'enroulement des fils sur la roue-enclume 72 suffisamment grand pour assurer l'entrainement desdits fils par la force de friction.

Un peigne 12 placé juste à l'entrée de la machine de coupe 7 permet de maintenir les fils divisés pour leur coupe dans la machine 7 durant le déplacement de ces derniers dans le mouvement de va et vient qui est habituellement pratiqué pour répartir l'usure sur toute la largeur de la roue.

La filière 1 et le rouleau ensimeur 3 sont préférentiellement disposés l'un au-dessus de l'autre par exemple dans une même cellule de fibrage 81 qui repose sur un plancher 9 lui-même percé d'au moins une première ouverture 10 pour le passage de la machine de coupe 7.

La roulette de déviation 4 est préférentiellement disposée à l'aplomb du rouleau ensimeur 3, au-dessous du plancher 9. Une deuxième ouverture (non visible), réalisée dans le plancher 9 permet avantageusement, selon l'invention, le passage du faisceau de filaments 2 en aval du rouleau ensimeur 3. La deuxième ouverture (non représentée) peut aussi permettre d'évacuer les fibres pendant les casses.

Ainsi les filaments 2 présentent un trajet sensiblement vertical, depuis la filière 1 jusqu'à la roulette de déviation 4 qui dévie les fils d'environ 90° pour les mener horizontalement (ou sensiblement horizontalement) vers la machine de coupe 7. Celle-ci est placée devant la cellule de fibrage 81, soit au-dessus du plancher 9 soit au-dessous. Lorsque la machine de coupe 7 est disposée au-dessous du plancher 9, un couvercle 11 vient préférentiellement couvrir l'ouverture 10 dans le plancher 9.

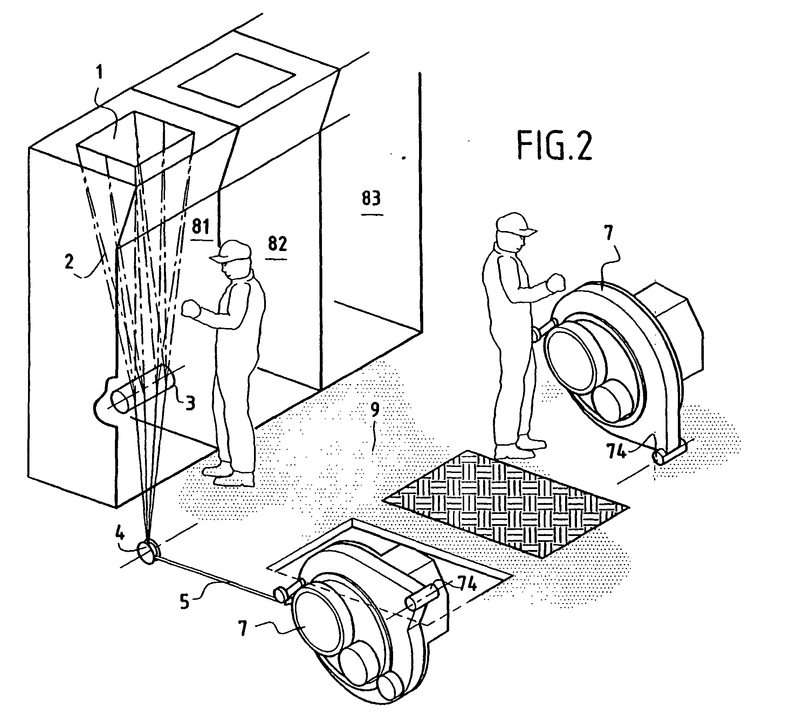

La figure 2 illustre les positions possibles de la machine de coupe 7.

A l'avant de cette figure la machine est représentée en position basse. en-dessous du plancher 9, position dite de production. En arrière-plan. une machine de coupe 7 est représentée en position haute dite d'entretien.

Cet arrangement permet avantageusement de ne gêner ni le champ visuel des opérateurs, ni leurs déplacements autour des différentes machines.

Bien entendu, chaque machine de coupe 7 est munie d'un axe de rotation horizontal 74 ou de tout autre moyen équivalent qui permet de la faire passer d'une position à une autre.

En position relevée, l'opérateur peut réaliser par exemple le changement d'une roue ou de toute autre pièce sur la machine 9. Toute opération de petite maintenance s'effectue donc dans cette position. Pour une maintenance plus importante, il est possible de remplacer une machine défectueuse par une machine de rechange. A titre illustratif on peut prévoir une machine de rechange, prête à fonctionner, pour l'ensemble des machines en fonctionnement.

La présente invention permet de maintenir une division des fils depuis la roulette de déviation 4 jusqu'au contact avec la roue-enclume 72 et la roue porte-lames 71. La simplicité du trajet des fils 5, depuis la roulette de déviation 4 jusqu'à la machine de coupe 7 permet en effet de maintenir cette division d'une façon simple et donc fiable. Ce dispositif de séparation va permettre de produire du fil coupé à partir de grosses filières munies de plusieurs milliers de tétons, sans rencontrer de problèmes de qualité de coupe ni d'usure prématurée des cylindres étireurs.

La relance dans la machine de coupe 7 peut être automatique, sans intervention humaine.

La présente invention permet avantageusement de répondre aux exigences de plus en plus marquées du client en matière de qualité.

La qualité de la coupe est notamment améliorée en termes de densité (plus constante) et d'intégrité c'est-à-dire de cohésion des filaments formant les fils.

Par ailleurs l'arrangement selon l'invention permet une parfaite maîtrise de chaque filière. Il est en effet possible de bien adapter la vitesse de chaque machine de coupe 7 à la tirée de la filière associée 1. Un ajustement spécifique de la tirée est donc réalisé pour chaque ensemble filière-coupeur de sorte qu'un produit de haute qualité peut être obtenu. Une amélioration dans le respect des spécifications est opérée selon l'invention.

Un autre avantage majeur du dispositif selon l'invention concerne l'augmentation du rendement. A titre illustratif les filières associées à un seul coupeur telles que connues à ce jour, présentent au maximum 4000 trous chacune. Au-delà de cette valeur, le coupeur présente de gros problèmes, les casses sont très fréquentes, le rendement diminue et la qualité du produit final est médiocre. En d'autres termes, un tel processus atteint ses limites.

Conformément à la présente invention, chaque filière peut débiter au moins 6000 filaments sans qu'aucun des problèmes énoncés ci-dessus ne se pose. Une augmentation significative de la production en découle.

Par ailleurs, étant donné qu'avec les processus multi-filières connus. la machine de coupe doit couper un nombre très important de fils, son taux de casse est très important. La présente invention permet de diminuer ce taux de l'ordre de 80% car les phases transitoires (après relance) sont très réduites et il n'y a plus d'interaction entre les filières.

Les casses dues à la thermique (transitoires... ) et au trajet lui-même sont diminuées car chaque filière 1 fonctionne selon un régime plus stable donc plus fiable.

Par ailleurs, la durée de vie de chaque roue-enclume 72 est considérablement augmentée car l'usinage est direct et simplifié. La durée de vie devrait passer de 5 heures actuellement à 25 heures selon l'invention.

Ceci diminue bien entendu les temps d'intervention des opérateurs, même si ceux-ci doivent gérer plusieurs machines de coupe (au lieu d'une seule). Selon l'art antérieur, un changement de roue dure environ un quart d'heure ; la diminution du nombre d'interventions de ce type est donc synonyme de gain de temps appréciable.

Il est en outre intéressant de pouvoir produire selon l'invention des fils coupés constitués de filaments 2 de petit diamètre, inférieur à 10 µm. A titre d'exemple, la présente invention permet de réaliser des fils 5 constitués de filaments 2 de 9 µm de diamètre, les fils coupés ayant des longueurs comprises entre 1,5 mm et 50 mm. Bien entendu, la présente invention permet aussi de fabriquer des fils coupés constitués de filaments 2 ayant un plus grand diamètre.

Chaque ensemble filière 1-coupeur 7 selon l'invention nécessite un encombrement réduit ; sa largeur peut être de l'ordre de 1 m ; sa profondeur est d'environ au moins deux mètres tandis que sa hauteur totale est d'environ 2,50 mètres.

Une disposition préférée de l'invention peut consister en un alignement de plusieurs ensembles (ou modules) 1-7 comme représenté schématiquement et partiellement sur la figure 2.

Ainsi un opérateur peut aisément surveiller tous les ensembles filière 1-coupeur 7, et intervenir rapidement sur un ensemble défaillant sans que les autres ne subissent la moindre perturbation.

De plus, une telle disposition permet des productions de natures différentes, à la limite autant que de modules. Cette flexibilité dans la production, qui se retrouve non seulement dans la nature de la production mais aussi dans sa quantité, est un autre avantage inhérent à la présente invention.

Un nombre approprié de modules peut être installé, en fonction des besoins. Selon la production souhaitée, tout ou partie des modules peuvent être mis en fonctionnement simultanément. De même, la mise au point d'un nouveau procédé de fibrage peut se faire sur un module isolé, sans interrompre ni perturber le fonctionnement des autres modules.

Les améliorations évoquées ci-dessus, nullement limitatives, doivent bien entendu être considérées comme le résultat de la combinaison des éléments constitutifs de l'invention.

## Revendications

1. Système destiné à la fabrication de fils (5) de matière thermoplastique coupés, tels que des fils de verre coupés, comprenant au moins une filière (1) coopérant avec au moins une machine de coupe (7) placées dans le prolongement l'une de l'autre, un moyen (3) d'ensimage des fils (5) et/ou des filaments (2) issus de la filière (1), au moins un moyen de renvoi (4), un plancher (9) **caractérisé en ce qu'**il comprend en outre un moyen (74) destiné à déplacer et à positionner la machine de coupe (7) en au moins deux positions : la première au-dessous dudit plancher (9), la deuxième au-dessus dudit plancher (9), et une première ouverture (10) dans le plancher (9), à travers laquelle est déplacée la machine de coupe (7).

2. Système selon la revendications 1 **caractérisé en ce qu'**il comprend en outre un moyen (12) destiné à diviser les fils (5) avant leur entrée dans la machine de coupe (7).

3. Système selon l'une quelconque des revendications précédentes **caractérisé en ce qu'**il comprend en outre un élément (11) destiné à couvrir ladite première ouverture (10) notamment lorsque la machine (7) est positionnée au-dessous du plancher (9).

4. Système selon l'une quelconque des revendications précédentes **caractérisé en ce que** le moyen de déplacement comprend un axe (74) sensiblement horizontal autour duquel la machine de coupe (7) peut se déplacer entre la première et la deuxième position.

5. Système selon l'une quelconque des revendications précédentes **caractérisé en ce que** les différents éléments sont disposés de telle sorte que le trajet des fils (5) et des filaments (2) depuis la filière (1) jusqu'à la machine de coupe (7), est globalement contenu dans un plan vertical, les filaments (2) ayant une direction sensiblement verticale de la filière (1) jusqu'au moyen de renvoi (4), et les fils (5) ayant une direction sensiblement horizontale du moyen (4) jusqu'à leur entrée dans la machine de coupe (7).

6. Système selon l'une quelconque des revendications précédentes **caractérisé en ce qu'**il comprend en outre un moyen pour régler individuellement la vitesse d'étirage des fils (5) en fonction du débit de la filière associée (1).

7. Système selon l'une quelconque des revendications précédentes **caractérisé en ce qu'**il comprend en outre au moins une deuxième ouverture dans le plancher (9) pour le passage des filaments, en aval de la filière 1 et avant leur passage sur le moyen de renvoi (4).

8. Système selon l'une quelconque des revendications précédentes **caractérisé en ce qu'**il comprend plusieurs filières (1) chacune associée à une machine de coupe (7), et **en ce que** lesdites filières (1) sont alignées les unes à côté des autres.

9. Système selon la revendication 8 **caractérisé en ce que** les machines de coupe (7) sont alignées parallèlement à l'alignement desdites filières (1).

10. Système selon l'une quelconque des revendications précédentes **caractérisé en ce que** chaque filière (1) comprend au moins 4000 trous de passage de filaments thermoplastiques (2).

## Claims

1. System intended for the manufacture of cut threads (5) of thermoplastic material, such as cut glass threads, comprising at least one die (1) cooperating with at least one cutting machine (7) placed in line with each other, a means (3) of oiling the threads (5) and/or filaments (2) issuing from the die (1), at least one return means (4), a floor (9) **characterised in that** it also comprises a means (74) intended to move and position the cutting machine (7) in at least two positions: the first below the said floor (9), the second above the said floor (9), and a first opening (10) in the floor (9), through which the cutting machine (7) is moved.

2. System according to Claim 1, **characterised in that** it also comprises a means (12) intended to divide the threads (5) before they enter the cutting machine (7).

3. System according to any one of the preceding claims, **characterised in that** it also comprises an element (11) intended to cover the said first opening (10) in particular when the machine (7) is positioned below the floor (9).

4. System according to any one of the preceding claims, **characterised in that** the movement means comprises a substantially horizontal axis (74) about which the cutting machine (7) can move between the first and second positions.

5. System according to any one of the preceding claims, **characterised in that** the various elements are disposed so that the path of the threads (5) and filaments (2) from the die (1) as far as the cutting machine (7) is roughly contained in a vertical plane, the filaments (2) having a substantially vertical direction from the die (1) as far as the return means (4), and the threads (5) having a substantially horizontal direction from the means (4) until they enter the cutting machine (7).

6. System according to any one of the preceding claims, **characterised in that** it also comprises a means for individually adjusting the drawing speed of the threads (5) according to the output of the associated die (1).

7. System according to any one of the preceding claims, **characterised in that** it also comprises at least a second opening in the floor (6) for the filaments to pass, downstream of the die (1) and before they pass over the return means (4).

8. System according to any one of the preceding claims, **characterised in that** it comprises several dies (1) each associated with the cutting machine (7), and **in that** the said dies (1) are aligned alongside each other.

9. System according to Claim 8, **characterised in that** the cutting machines (7) are aligned parallel to the alignment of the said dies (1).

10. System according to any one of the preceding claims, **characterised in that** each die (1) comprises at least 4000 passage holes for the thermoplastic filaments (2).

## Patentansprüche

1. System, das zur Herstellung von Kurzfäden (5) aus einem wärmeformbaren Material wie Kurzglasfäden vorgesehen ist und mindestens eine Spinndüse (1), die mit wenigstens einer Schneidmaschine (7) zusammenwirkt, die in Verlängerung zueinander angeordnet sind, ein Mittel (3) zum Aufbringen von Schlichte auf die Fäden (5) und/oder Filamente (2), die von der Spinndüse (1) kommen, mindestens ein Umlenkmittel (4) und einen Boden (9) umfasst, **dadurch gekennzeichnet, dass** es außerdem ein Mittel (74), das vorgesehen ist, die Schneidmaschine (7) zu bewegen und in mindestens zwei Positionen, nämlich die erste unter dem Boden (9) und die zweite über dem Boden (9), zu bringen, und eine erste Öffnung (10) im Boden (9) umfasst, durch welche die Schneidmaschine (7) bewegt wird.

2. System nach Anspruch 1, **dadurch gekennzeichnet, dass** es außerdem ein Mittel (12) umfasst, das vorgesehen ist, die Fäden (5) vor ihrem Eintritt in die Schneidmaschine (7) aufzuteilen.

3. System nach einem der vorhergehenden Ansprüche, **dadurch gekennzeichnet, dass** es darüber hinaus ein Element (11) umfasst, das vorgesehen ist, die erste Öffnung (10) zu bedecken, insbesondere wenn die Maschine (7) unter dem Boden (9) angeordnet ist.

4. System nach einem der vorhergehenden Ansprüche, **dadurch gekennzeichnet, dass** das Bewegungsmittel eine im Wesentlichen horizontale Achse (74) umfasst, um welche sich die Schneidmaschine (7) zwischen der ersten und der zweiten Position bewegen kann.

5. System nach einem der vorhergehenden Ansprüche, **dadurch gekennzeichnet, dass** die verschiedenen Elemente derart angeordnet sind, dass der Weg der Fäden (5) und der Filamente (2) von der Spinndüse (1) bis zur Schneidmaschine (7) im Großen und Ganzen in einer vertikalen Ebene enthalten ist, die Filamente (2) eine im Wesentlichen zur Spinndüse (1) vertikale Richtung bis zum Umlenkmittel (4) verfolgen und die Fäden (5) vom Mittel (4) bis zu ihrem Eintritt in die Schneidmaschine (7) eine im Wesentlichen horizontale Ausrichtung besitzen.

6. System nach einem der vorhergehenden Ansprüche, **dadurch gekennzeichnet, dass** es außerdem ein Mittel zur individuellen Regelung der Ziehgeschwindigkeit der Fäden (5) in Abhängigkeit vom Durchsatz der mit ihm verbundenen Spinndüse (1) umfasst.

7. System nach einem der vorhergehenden Ansprüche, **dadurch gekennzeichnet, dass** es außerdem mindestens eine zweite Öffnung in dem Boden (9) für den Durchgang der Filamente nach der Spinndüse (1) und vor ihrem Durchlauf über das Umlenkmittel (4) umfasst.

8. System nach einem der vorhergehenden Ansprüche, **dadurch gekennzeichnet, dass** es mehrere Spinndüsen (1) umfasst, wovon jede mit einer Schneidmaschine (7) verbunden ist, **und dass** die Spinndüsen (1) nebeneinander angeordnet sind.

9. System nach Anspruch 8, **dadurch gekennzeichnet, dass** die Schneidmaschinen (7) zur Anordnung der Spinndüsen (1) parallel ausgerichtet sind.

10. System nach einem der vorhergehenden Ansprüche, **dadurch gekennzeichnet, dass** jede Spinndüse (1) mindestens 4 000 Durchgangslöcher für die wärmeformbaren Filamente (2) enthält.
